## Europäisches Patentamt

## European Patent Office

## Office européen des brevets

(19)

(11) Veröffentlichungsnummer: **0 043 864**
**B1**

(12) **EUROPÄISCHE PATENTSCHRIFT**

(45) Veröffentlichungstag der Patentschrift:
06.06.84

(51) Int. Cl.³: **G 11 B 3/42,** H 04 R 1/16

(21) Anmeldenummer: **80103998.3**

(22) Anmeldetag: **11.07.80**

(54) **Tonabnehmernadel mit auswechselbarer Halterung.**

(43) Veröffentlichungstag der Anmeldung:
**20.01.82 Patentblatt 82/3**

(45) Bekanntmachung des Hinweises auf die Patenterteilung:
**06.06.84 Patentblatt 84/23**

(84) Benannte Vertragsstaaten:
**CH DE FR GB IT LI NL**

(56) Entgegenhaltungen:
**DE - B - 1 112 840**
**FR - A - 2 049 418**
**FR - A - 2 090 953**
**FR - A - 2 301 891**
**GB - A - 1 152 384**
**GB - A - 1 285 555**
**US - A - 4 009 885**

(73) Patentinhaber: **DUAL GEBRÜDER STEIDINGER,**
**Leopoldstrasse 1, D-7742 St. Georgen (DE)**

(72) Erfinder: **Zimmermann, Heinrich, Joh.Seb.Bach Strasse 14, D-7742 St. Georgen (DE)**
Erfinder: **Schamberger, Jörg, Schwarzwaldstrasse 8, D-7742 St.Georgen (DE)**

**Beschreibung**

Die Erfindung betrifft eine Halterung für eine Tonabnehmernadel wie sie im Oberbegriff des ersten Patentanspruchs beschrieben ist.

Tonabnehmernadeln mit quer zur Längsachse des Tonabnehmers gerichteter Auswechselbewegung werden verwendet, wenn es vorteilhaft oder notwendig ist, den Nadelträgerarm an die Stelle, die Verbindung zum elektro-mechanischen Wandler herstellt, in dieser Richtung heranzuführen. Dies ist z. B. bei Tonabnehmern mit keramischen Wandlern zweckmäßig, da sonst bei einer Längsverschiebung des elastische Ankopplungsteil zwischen Wandler und Nadelarm in Längsrichtung des Nadelarmes verspannt wird. Bei magnetischen Systemen, die einen nur in Querrichtung zugänglichen Luftspalt haben, ist eine entsprechende Auswechselbewegung der Nadel notwendig, wenn man nicht in Kauf nehmen will, daß ein Teil der Magnetpole mit ausgewechselt wird.

Da die Tonabnehmernadel ein verhältnismäßig kleiner und empfindlicher Gegenstand ist, der an einer nicht gerade bequem zugänglichen Stelle des Plattenspielers sitzt und außerdem ein Wechsel möglichst vom Gerätebenutzer selbst durchführbar sein soll, sind schon sehr viele Anordnungen zur Lösung dieses nicht einfachen Problems bekanntgeworden, die jedoch alle noch nicht befriedigen.

Ein verhältnismäßig einfaches Lösungsprinzip besteht z. B. darin, daß das Halteteil der Nadel U-förmig ausgebildet ist und von unten her mit seinen U-förmigen Schenkeln auf das Gehäuse des Tonabnehmers aufgeschoben wird, wobei die U-förmigen Schenkel neben einer Haltekraft auch eine gewisse Führung geben (DE-AS 1 112 840, Gbm 1 789 402). Der Nachteil einer solchen Anordnung ist, daß einmal nicht gut erkennbar ist, wo das Halteteil sitzen soll, weil die Führungsmittel am Gehäuse aus nur verhältnismäßig flachen Ausnehmungen bestehen können und das Gehäuse außerdem in der Regel aus einem einfarbigen Kunststoffteil besteht, das aus ästhetischen Gründen außerdem vorzugsweise noch schwarz ist. Zum anderen ist die Führung der Einschubbewegung verhältnismäßig kurz, so daß sie nicht sofort beim ersten Ansteckversuch im Bereich der Ankopplungsstelle des Wandlers die gewünschte Zuführbewegung erzwingt (verkantetes Aufsetzen). Es reicht nicht, daß die Nadel nach mehrfachem Probieren schließlich die richtige Lage erhält. Bis dahin können Schäden entstanden sein oder soweit es einen piezoelektrischen Wandler betrifft, kann das Ankopplungsteil zumindest eine nach vorn oder hinten verspannte Lage erhalten. Unangenehm ist es zuweilen auch, daß die Nadel zur Überwindung ihrer Haltekraft, die wegen der kleinen Federwege oftmals erheblich ist, kräftig abgezogen werden muß. Die plötzliche Kraftentlastung beim Lösen der Nadel kann zu unkontrollierten Bewegungen führen, die vor allem dann zu Beschädigungen führen können, wenn der Tonabnehmer beim Nadelwechsel im Arm verbleibt, was wünschenswert ist.

Eine weitere bekannte Lösung (DE-OS 1 472 048) besteht darin, daß das Halteteil durch eine Kippbewegung zugeführt wird, indem es erst mit seinem hinteren Teil hinter einen Vorsprung des Tonabnehmergehäuses schräg eingeführt wird und dann mit seinem vorderen Teil gegen das Gehäuse angehoben wird, wo es dann verrastet. Der Vorteil dieser Anordnung gegenüber der vorher beschriebenen besteht darin, daß die Lage des Halteteils bezüglich der Längsrichtung des Tonabnehmers beim Ansetzen eindeutiger bestimmt wird, weil es eindeutig gegen einen Anschlag zur Anlage gebracht werden muß. Die Ausrichtung zur Längsachse des Tonabnehmers wird zwar durch eine Längsausnehmung im Gehäuse ebenfalls eindeutiger und an sich auch gut sichtbar bestimmt, aber die Längsausnehmung liegt notwendigerweise an der Unterseite des Gehäuses, so daß sie zumindestens mit ihrem hinteren Ende nicht ohne weiteres erkennbar ist.

Beide vorgenannten Lösungen haben vor allem den Nachteil, daß das Halteteil auf dem Zuführweg zu seiner Betriebslage bis kurz vor diese von beiden Fingern gehalten bzw. geführt werden muß, wobei häufig erschwerend hinzukommt, daß durch die beschränkte Anhebemöglichkeit des Tonarmes die Ansetzbewegung quer zur Längsrichtung der Finger erfolgen muß.

Für Tonabnehmer der hier nicht betreffenden Art sind Nadelhalterungen bekannt, die die vorgenannten Nachteile nicht besitzen. Es handelt sich dabei um magnetische Tonabnehmer, deren Luftspalte in Längsrichtung des Tonabnehmers zugänglich sind, so daß die Nadel-Anker-Einheit in dieser Richtung zugeführt wird (DE-OS 2 159 573). Derartige Halterungen sind jedoch nicht für die hier betreffenden Nadeln bzw. Tonabnehmer verwendbar.

Der Erfindung liegt die Aufgabe zugrunde, den Nadelwechsel zu erleichtern und die Sicherheit gegen eine Beschädigungsgefahr des Tonabnehmers zu erhöhen. Gelöst wird diese Aufgabe durch die im ersten Patentanspruch angegebene Erfindung.

Der erfindungsgemäßen Lösung liegt insofern eine neue Wechselmethode der Nadel zugrunde, als ihre Zuführbewegung in zwei zwangsgeführten Richtungen erfolgt, wobei die anfängliche, eine in Längsrichtung des Tonabnehmers liegende ist, die sich bei anderen, hier nicht betreffenden Tonabnehmern an sich bewährt hat. Dieser Teil der Zuführbewegung wird jedoch nur zum Verbringen der Nadel in eine bestimmte Zwischenposition benutzt, in der sie sich selbst hält und von wo aus die eigentliche senkrecht dazu gerichtete Ansteckbewegung erfolgt, die dann ohne jede optische Orientierungshilfe durch bloßen Druck mit nur einem Finger erfolgen kann.

Die Erfindung ist anhand von Abbildungen zweier Ausführungsbeispiele nachfolgend näher beschrieben.

Fig. 1 stellt einen magnetischen Tonabnehmer ohne die auswechselbare Nadel-Anker-Einheit und

Fig. 2 die zugehörige Nadel-Anker-Einheit dar.

Fig. 3 stellt eine Schnittansicht des Tonabnehmers gemäß Fig. 2 längs der Linie I-I dar.

Fig. 4 stellt einen keramischen Tonabnehmer ohne Nadel und

Fig. 5 die zugehörige Nadel dar.

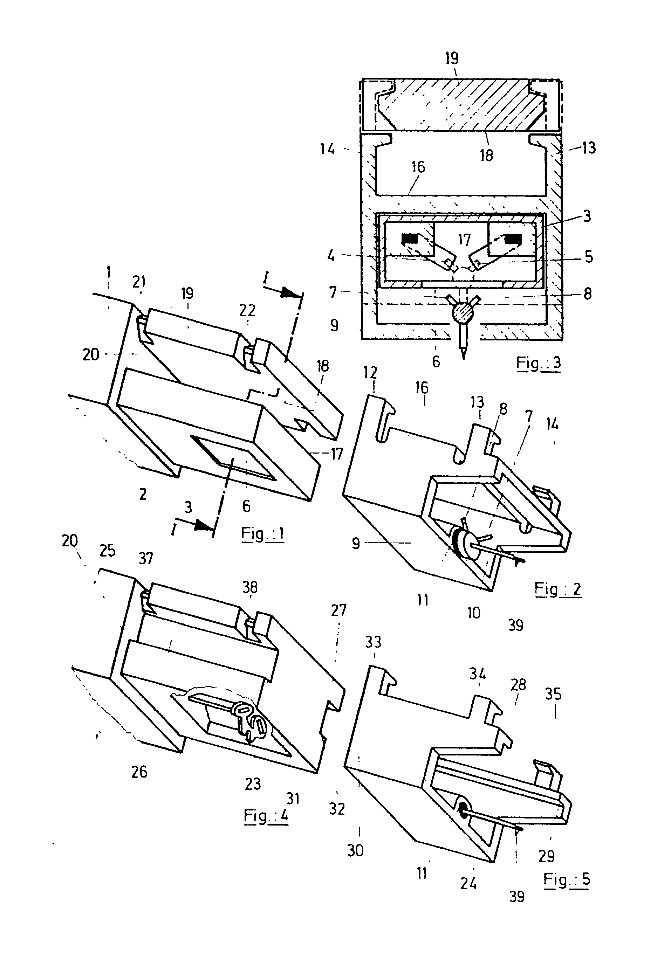

Das Gehäuse 1 des magnetischen Tonabnehmers gemäß Fig. 1—3 besteht aus einem Kunststoffteil 2, aus dem eine Blechabschirmung 3 herausragt, in der sich die Polschuhe 4, 5 der magnetischen Kreise zweier Wandlersysteme zur Wiedergabe stereophonischer Aufzeichnungen befinden. Diese sind zum Zuführen der magnetischen Anker 7, 8 von unten her durch eine Öffnung 6 in den Boden der Abschirmung 3 zugänglich. Die zugehörige Nadel-Anker-Einheit (Fig. 2) besteht aus einem Halteteil 9, an dem ein Nadelarm 10 mittels eines elastischen Lagers 11 befestigt ist. An dem Nadelarm 10 sind die beiden magnetischen Anker 7, 8 der beiden Wandlersysteme befestigt. Das Halteteil 9 hat die Form eines vierkantigen Rohres, von dem 4 federnde Arme 12 bis 14 nach oben abstehen. Der innere Querschnitt des Halteteils 9 ist der Außenform der Abschirmung 3 mit Ausnahme der Höhe angepaßt. Wird das Halteteil 9 auf die Abschirmung 3 aufgeschoben, so liegt es mit seiner oberen Wand 16 auf der Oberseite 17 der Abschirmung 3 auf. Die federnden Arme 12 bis 14 des Halteteils 9 gleiten dabei an der Unterseite 18 eines Gehäusevorsprunges 19 entlang, so daß keine Bewegung des Halteteils 9 in irgendeiner Richtung, die quer zur Längsachse des Tonabnehmers liegt, möglich ist, so daß die kleinen empfindlichen Anker 7, 8 nirgendwo anstoßen können. In der Endstellung der längs des Tonabnehmers verlaufenden Zuführbewegung der Nadel, die durch Anschlagen des federnden Armes 12 an einem Anschlag 20 des Gehäuses bestimmt wird, gelangen die federnden Arme 12 bis 14 in Flucht mit Ausnehmungen 21, 22 im Gehäuse 1 des Tonabnehmers, die den federnden Armen 12 bis 14 und damit der gesamten Nadel-Anker-Einheit bei einem Druck von unten eine ausschließliche Führung in Richtung senkrecht zur Längsachse des Tonabnehmers geben, womit die beiden Anker 7, 8 ohne jede Beschädigungsgefahr in ihre Betriebsstellung gelangen, in der sie durch die Federkraft der federnden Arme 12 bis 14 gehalten werden.

Bei dem in Fig. 4 dargestellten keramischen Tonabnehmer ragt das Kopplungsmittel 23 zum Ankoppeln des Nadelarmes 24 an die Wandlerelemente in üblicher Weise aus der Unterseite des Tonabnehmergehäuses 25 heraus. Das Tonabnehmergehäuse 25 enthält seitlich zwei Längsnuten 26, 27, die der Aufnahme von Führungsleisten 28, 29 dienen, die an einem U-förmigen Halteteil 30 des Nadelarmes 24 angebracht sind. Diese Führungsleisten 28, 29 liegen beim Aufschieben des Halteteils 30 auf das Tonabnehmergehäuse 25 auf der unteren Gleitbahn 31, 32 seiner Längsnuten 26, 27 auf. Die Länge der federnden Arme 33 bis 35 entspricht etwa der Breite der Längsnuten 26, 27 des Tonabnehmergehäuses 25, so daß nur eine Bewegung in Längsrichtung möglich ist, wobei der Nadelarm 24 ungehindert am Ankopplungsteil 23 passieren kann. Auch hier wird erst am Ende des Längseinschubs die senkrechte Zuführbewegung freigegeben, indem die federnden Arme 33 bis 35 in Flucht mit entsprechenden Führungsausnehmungen 37, 38 im Gehäuse 25 des Tonabnehmers kommen. Der Nadelarm 24 kann dann durch einen Druck von unten mit dem Ankopplungsglied 23 in Eingriff gebracht werden, ohne es nach vorn oder hinten zu verspannen.

## Patentansprüche

1. Halterung für eine auswechselbare Tonabnehmernadel, die einen Nadelarm enthält, der im wesentlichen in Längsrichtung des Tonabnehmers liegt, an einem Ende die Abtastspitze trägt, auf seiner übrigen Länge an wenigstens einen elektro-mechanischen Wandler gekoppelt ist und ferner elastisch in einem Halteteil gelagert ist, das zum Zwecke einer leichten Auswechselbarkeit der Nadel durch eine Klemmvorrichtung am Gehäuse des Tonabnehmers gehalten wird, wobei die Klemmvorrichtung mit der Zuführbewegung der Nadel zur ihrer Betriebslage zur Wirkung kommt und diese Zuführbewegung im wesentlichen quer zur Längsachse des Tonabnehmers liegt, dadurch gekennzeichnet, daß das Gehäuse (1, 25) des Tonabnehmers und das Halteteil (9, 30) der Nadel zusätzlich mit Längsführungsmitteln (3, 19, 9; 26, 28) zum Bestimmen der Zuführbewegung der Nadel in Richtung parallel zur Längsachse des Tonabnehmers bis zu einem Anschlag (20) enthält und in der Anschlagstellung Querführungsmittel (z. B. 21, 12; 33, 37) in Funktionsstellung kommen, die die Zuführung der Nadel zu ihrer Betriebslage ausschließlich in Richtung quer zur Längsachse des Tonabnehmers erlauben.

2. Halterung für eine auswechselbare Tonabnehmernadel nach Anspruch 1, dadurch gekennzeichnet, daß die gehäuseseitigen Längsführungsmittel (3, 19, 9; 26, 28) aus prismatischen Führungsteilen bestehen, die sich über eine wesentliche Länge des Tonabnehmergehäuses (1, 25) erstrecken, um dem Halteteil (9, 30) eine exakte Längsführung zu ermöglichen.

3. Halterung für eine auswechselbare Tonabnehmernadel nach Anspruch 1 oder 2, dadurch gekennzeichnet, daß die Klemmvorrichtung aus federnden Armen (12 bis 14; 33 bis 35) besteht, die in Längsrichtung des Tonabnehmers gesehen quer abstehend und gegenüberliegend am Halteteil (9, 30) angebracht sind und das Tonabnehmergehäuse (1, 25) Ausnehmungen (z. B. 21, 22; 37, 38) zur Führung der federnden Arme (12 bis 14; 33 bis 35) in Richtung ihrer Längsachse enthält, die sich in Flucht mit den federnden Armen (12 bis 14; 33 bis 35) befinden, wenn sich die Nadel am Ende ihrer längs des Tonabnehmers gerichteten Zuführungsbewegung befindet.

## Claims

1. Holder for an exchangable phono pick-up needle including a needle arm, which lies (reaches) essentially in the longitudinal direction of the pick-up and carring at one end the peak of the scanner, the remaining length being coupled to at least one electro-mechanical transducer and further being resiliently borne in a holding device, which for the purpose of easy replacement of the needle is being held at the housing of the pick-up by a clamping decice, whereby the clamping device comes into action with the replacement motion of the needle into its operating position and the replacement motion lies essentially lateral to the longitudinal axis of the pick-up, characterized in that the housing (1, 25) of the pick-up and the holding device (9, 30) of the needle is fitted out addionally with longitudinal guiding means (3, 19, 9; 26, 28) for the definition of the replacement motion of the needle in a direction parallel to the longitudinal axis of the pick-up to a stop (20) and in that in the stop position come lateral guiding means (for instance 21, 12; 33, 37) into the position of function, which allow the replacement of the needle into its operating position only in the direction lateral to the longitudinal axis of the pick-up.

2. Holder for an exchangable phono pick-up needle according to claim 1, characterized in that the longitudinal guiding means (3, 19, 9; 26, 28) containing to the housing consist of prismatic guiding means, which extend over an essential length of the pick-up housing (1, 25) in order to allow an exact longitudinal guiding for the holding axis (9, 30).

3. Holder for an exchangable phono pick-up needle according to claim 1 or 2, characterized in that the clamping device consists of springy arms (12 to 14; 33 to 35), which, seen in the longitudinal direction of the pick-up, are projecting lateral and are mounted opposite to the holding device (9, 30) and in that the pick-up housing (1, 25) contains recesses (for instance 21, 22; 37, 38) for the guidance of the springy arms (12 to 14; 33 to 35) in the direction of her longitudinal axis, which are in alignment with the springy arms (12 to 14; 33 to 35), if the needle will be found at the end of its replacement motion in the longitudinal direction of pick-up.

## Revendications

1. Support pour aiguille amovible le lecteur de disques phonographiques, comprenant une aiguille, disposée sensiblement dans la direction longitudinale de la tête de lecture, portant à l'une de ses extrémités la pointe de lecture, reliée sur le reste de sa longueur à au moins un transducteur électromagnétique, et montée élastiquement sur un élément-support, lequel, afin de faciliter le changement d'aiguille, est fixé au châssis de la tête de lecture par un dispositif d'assemblage entrant en action conjointement avec le mouvement d'amenée de l'aiguille à sa position de fonctionnement, et ce mouvement d'amenée étant sensiblement perpendiculaire à l'axe longitudinal de la tête de lecture, caractérisé en ce que le châssis (1, 25) de la tête de lecture et l'élément-support (9, 30) de l'aiguille comportent en outre des moyens de guidage longitudinal (3, 19, 9; 26, 28) définissant le mouvement d'amenée de l'aiguille dans une direction parallèle à l'axe longitudinal de la tête de lecture jusqu'à une butée (20), et en ce que, une fois atteinte la position de butée, des moyens de guidage transversal — (par ex. 21, 12; 33, 37) se mettent en place, lesquels permettent l'amenée de l'aiguille à sa position de fonctionnement exclusivement dans une direction perpendiculaire à l'axe longitudinal de la tête de lecture.

2. Support selon la revendication 1, caractérisé en ce que les moyens de guidage longitudinal portés par le châssis (3, 19, 9; 26, 28) sont constitués d'éléments de guidage prismatiques qui occupent une longueur notable du châssis (1, 25) de la tête de lecture et assurent à l'élément-support (9, 30) un guidage longitudinal précis.

3. Support selon la revendication 1 ou 2, caractérisé en ce que le dispositif d'assemblage est constitué de bras élastiques — (12 à 14, 33 à 35) solidaires de l'élément-support (9, 30) et, vus dans la direction longitudinale de la tête de lecture, écartés latéralement et placés en regard, et en ce que le châssis (1, 25) de la tête de lecture comporte des évidements (par ex. 21, 22; 37, 38) pour le guidage des bras élastiques (12 à 14; 33 à 35) dans la direction de leur axe longitudinal, ces évidements venant en alignement avec les bras élastiques (12 à 14; 33 à 35) lorsque l'aiguille se trouve à la fin de son mouvement d'emenée le long de la tête de lecture.

Fig.: 3

Fig.: 1

Fig.: 2

Fig.: 4

Fig.: 5